# EUROPEAN PATENT SPECIFICATION

(11) **EP 3 733 470 B1**
(45) Date of publication and mention of the grant of the patent: **30.03.2022**
(21) Application number: 20166804.3
(22) Date of filing: 30.03.2020
(51) Int. Cl.: B60T 17/08

(54) **EMERGENCY BRAKING SYSTEM FOR A MOBILE ROBOT**
NOTBREMSSYSTEM FÜR EINEN MOBILEN ROBOTER
SYSTÈME DE FREINAGE D'URGENCE POUR UN ROBOT MOBILE

(30) Priority: 28.03.2019 GB 201904316
(43) Date of publication of application: 04.11.2020
(73) Proprietor: Arrival Limited, London W14 8TS (GB)
(72) Inventor: MINICHEV, Artem, London, W14 8TS (GB); KOZLENOK, Aleksandr, London, W14 8TS (GB)
(74) Representative: Korenberg, Alexander Tal

(56) References cited:
- EP-A1- 2 762 434
- CN-A- 105 751 237
- CN-A- 108 994 813
- CN-Y- 201 400 495
- FR-A- 922 978

## Description

### TECHNICAL FIELD

The present invention relates generally to robots, and more particularly to an emergency braking system for a mobile robot.

### BACKGROUND

Robots, such as automated guided vehicles (AGVs), are used in a variety of areas, including support for processing and handling throughout a facility or outside. Some specific applications of robots or AGVs include: 1) assembly, e.g., moving products through production processes; 2) kitting, e.g., collecting parts for assembly; 3) transportation, e.g., loading pallets and loose parts; 4) staging, e.g., delivering pallets for production processes; 5) warehousing, e.g., moving products from stretch wrappers to docks or storage; 6) order picking, e.g., moving ordered products to trailer-loading areas for distribution, and transporting a platform for a picker to place selected items upon; 7) parts/just-in-time (JIT) delivery, e.g., towing trailers of parts/materials to consumption points; 8) transfer/shuttle, e.g., transfer loads across high traffic aisles; 9) surveillance, e.g., if equipped with cameras and sensors.

There is a need for an emergency braking system because AGVs can move at very high speeds and carry heavy loads. An AGV that malfunctions can present a danger to not just other equipment and property, but lives as well. An emergency braking system is desirable for AGVs operating in any number of different fields such as, but not limited to: automotive, beverage, chemicals, commercial printing, food, hospital, manufacturing, newspaper, paper, pharmaceutical, plastics, warehousing and distribution, and so forth. At that, known are robots with braking systems such as a robot brake chassis described in CN108994813 (A) published on December 14, 2018. The known robot brake chassis comprises a frame, wheels and braking units coupled to the frame, the braking units comprising brake pads and springs that urge the brake pads towards braking surfaces of the wheels.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may also be embodiments.

### BRIEF DESCRIPTION OF THE FIGURES

In the following drawings like reference numerals designate like structural elements. Although the figures depict various examples, the one or more embodiments and implementations described herein are not limited to the examples depicted in the figures.
FIG. 1 shows a block diagram of a robot having an emergency braking system, according to one or more embodiments.
FIG. 2 shows a front view of a robot having an emergency braking system with a trigger in an "ON" position, according to one or more embodiments.
FIG. 3 shows a side view of the robot shown in FIG. 2, according to one or more embodiments.
FIG. 4 shows a rear view of the robot shown in FIG. 2, according to one or more embodiments.
FIG. 5 shows a rear view of the robot with the trigger in an "OFF" position, according to one or more embodiments.
FIG. 6 shows a side view of the robot shown in FIG. 5, according to one or more embodiments.
FIG. 7 shows an enlarged front view of the trigger mechanism, according to one or more embodiments.
FIG. 8 shows a schematic diagram of an emergency brake control system, according to one or more embodiments.
FIG. 9 shows a schematic diagram of an emergency braking system mechanism in a first position, according to one or more embodiments.
FIG. 10 shows a schematic diagram of the emergency braking system mechanism shown in FIG. 9 in a second position, according to one or more embodiments.
FIG. 11 shows a side view of a braking pad assembly of an emergency braking unit, according to one or more embodiments.
FIG. 12 shows a front view of a brake activator, according to one or more embodiments.
FIG. 13 shows a side view of the brake activator shown in FIG. 12, according to one or more embodiments.
FIG. 14 shows a rear view of the brake activator shown in FIG. 12, according to one or more embodiments.
FIG. 15 shows a block diagram of a computer system suitable for use with a robot having an emergency braking system, according to one or more embodiments.

### DETAILED DESCRIPTION

A detailed description of one or more embodiments is provided below along with accompanying figures that illustrate the principles of the described embodiments. While aspects of the invention are described in conjunction with such embodiment(s), it should be understood that it is not limited to any one embodiment. On the contrary, the scope is limited only by the claims.

For the purpose of example, numerous specific details are set forth in the following description in order to provide a thorough understanding of the described embodiments, which may be practiced according to the claims without some or all of these specific details. For the purpose of clarity, technical material that is known in the technical fields related to the embodiments has not been described in detail so that the described embodiments are not unnecessarily obscured.

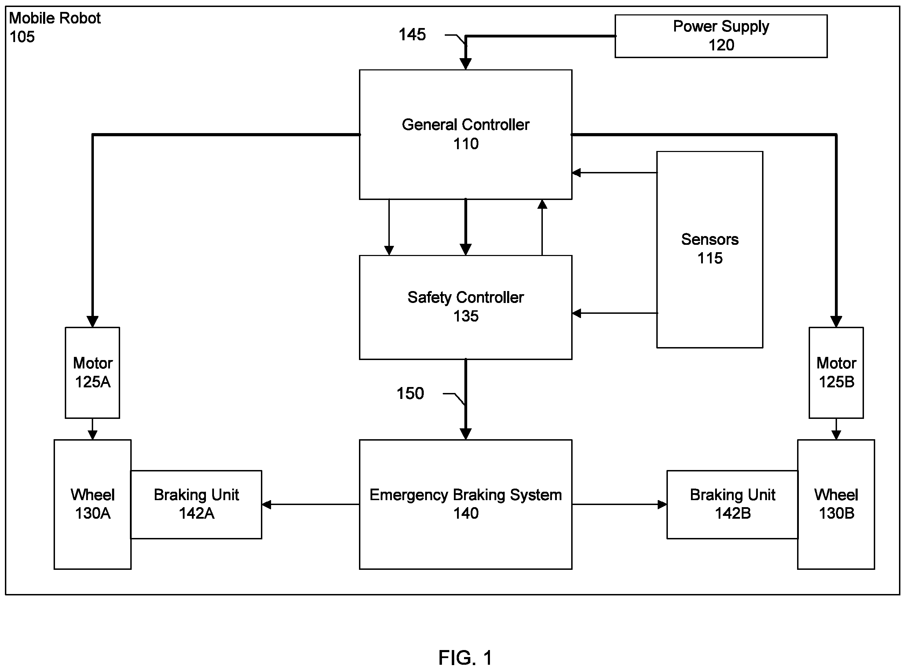

FIG. 1 shows a block diagram of a mobile robot 105. The robot may be an automated guided vehicle (AGV). An AGV is a portable robot that follows along marked lines or wires on the floor, or uses radio waves, vision cameras, magnets, or lasers for navigation. This AGV can be used in industrial applications to transport heavy materials around a large industrial building, such as a factory or warehouse.

In an embodiment, robot 105 includes a general controller 110 that interconnects sensors 115, a power supply 120, one or more motors 125A, B, one or more wheels 130A, B, a safety controller 135, an emergency braking system 140, and one or more emergency braking units 142A, B for the one or more wheels 130A, B, respectively.

The general controller is responsible for the overall operation of the robot. The general controller may include components such as a processor, memory, storage, network interface, and the like that are interconnected by a system bus. Programs, data, and other information may be stored in storage and read into memory for the processor to execute and process.

Sensors may include navigation sensors, inertial sensors, inclinometers, accelerometers, range sensors, obstacle detectors, light sensors, cameras, acceleration sensors, gyroscopes, and location sensors (e.g., global positioning system (GPS) sensors) - just to name a few examples. These sensors generate signals that are passed to the general controller, safety controller, or both.

The power supply may include a battery. The battery may be rechargeable or non-rechargeable. Examples of batteries include nickel cadmium batteries, nickel metal hydride batteries, lithium ion batteries, and sealed lead acid batteries. In another specific embodiment, the power supply can be a wall socket. For example, an electrical cord may be used to connect the robot to the wall socket. In another specific embodiment, power may be provided wirelessly such as via electromagnetic induction, magnetic resonance, or other wireless power transfer.

The motors receive driving control signals from the general controller. These driving control signals can cause the robot to move forward, move backward, turn left, turn right, accelerate, decelerate, stop, and so forth. For example, power from the power supply is provided to the motors so as to generate a rotational force that moves the wheel. Thus, a power path 145 may be from the power supply to the general controller and to each of the motors.

A robot may include a single wheel that is driven by a single motor. A robot may include two or more wheels driven by a single motor. A robot may include multiple wheels and multiple motors where each wheel is driven by a particular motor. In a specific embodiment, a motor also provides primary braking responsibilities to the wheel. That is, the motor is used to brake the wheel and stop the robot from moving.

It is desirable, however, to have an emergency braking system. The emergency braking system can be used to brake the wheels and stop the robot in the event that there is an emergency. In an embodiment, the safety controller is connected to the emergency braking system and includes logic to determine whether there is an emergency. When there is an emergency, the emergency braking units can be activated via a brake activator of the emergency braking system to stop the wheels of the robot.

In an embodiment, emergency braking refers to braking used to stop a vehicle, such as the mobile robot, in critical situations associated with a lack of time and distance. A developed mobile robot (or application of a robot) can be equipped with powerful motors that allow the necessary accelerations when moving with any load in a specified range. In the event of a failure in the control system, the robot may develop a dangerously high-level of kinetic energy. In a specific embodiment, under normal operating conditions, the robot performs braking using motors. But in an emergency situation, when reducing the kinetic energy of a robot using motor braking is not possible, the emergency braking system can be used to help prevent accidents.

In a specific embodiment, the emergency braking system provides for a mechanical braking. More particularly, specific embodiments allow braking by mechanical locking of the wheels of the robot in cases where motor braking is not possible. This might happen in rare cases where, for example, the power circuit is damaged or the processor, controlling the motor has a software error. Without the emergency braking system, the mobile robot (e.g., AGV) could become a source of danger for humans and workshop equipment, especially if loaded.

There are various types of brake systems, such as: mechanical, pneumatic, hydraulic, electric, and so forth. Specific types of brakes include disk brakes, drum brakes, tape brakes, and magnetic brakes (e.g., single disk electromagnetic brakes). Brake systems can be normally open or normally closed. For controlled braking, normally open brakes are usually applied. For transport technology equipment, as well as transport such as trains, normally closed brakes can be used. There can be normally closed hydraulic tape brakes. There can be normally closed shoe brakes. Aspects and principles of the emergency braking system, as described herein, can be applied to a variety of different brake types (e.g., drum brakes, disk brakes, and others).

In a specific embodiment, there is an emergency braking system that provides reliable emergency braking of a wheeled logistic robot. The emergency braking system can be applied in other areas as well. In a specific embodiment, there are normally applied brakes, which are kept from being closed by a force acting from an electromagnet. The brakes are disabled until a supply voltage is applied to the magnet. If the control system makes a decision about an emergency situation that requires braking, the electromagnet turns off and the brakes block the wheels. Also, the wheels are blocked in case of a power failure of the system.

In a specific embodiment, there is a power path 150 from the power supply to the safety controller and ultimately to the emergency braking system. The power in power path 150 energizes an electromagnet of the emergency braking system which, in turn, maintains the emergency braking units in a non-emergency braking mode in which the wheels are free to move (or stop) via the motors. If, for example, the power is interrupted such as by the safety controller determining that there is an emergency, an emergency braking mode is entered where the electromagnet is de-energized which in turn activates the emergency braking units to prevent the wheels from moving.

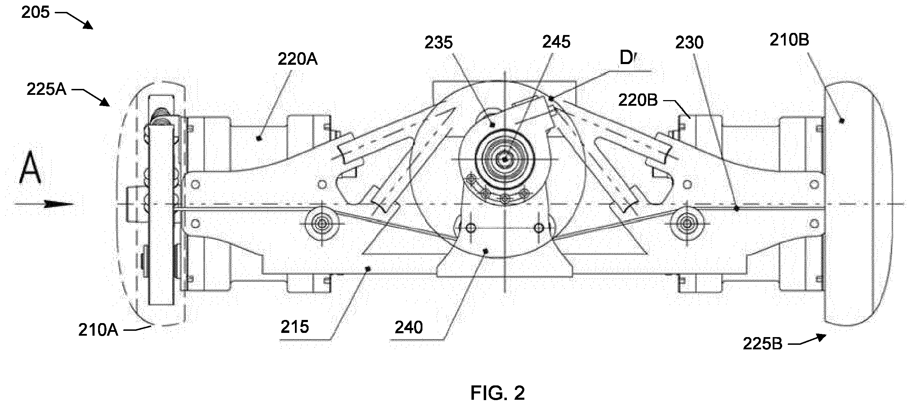

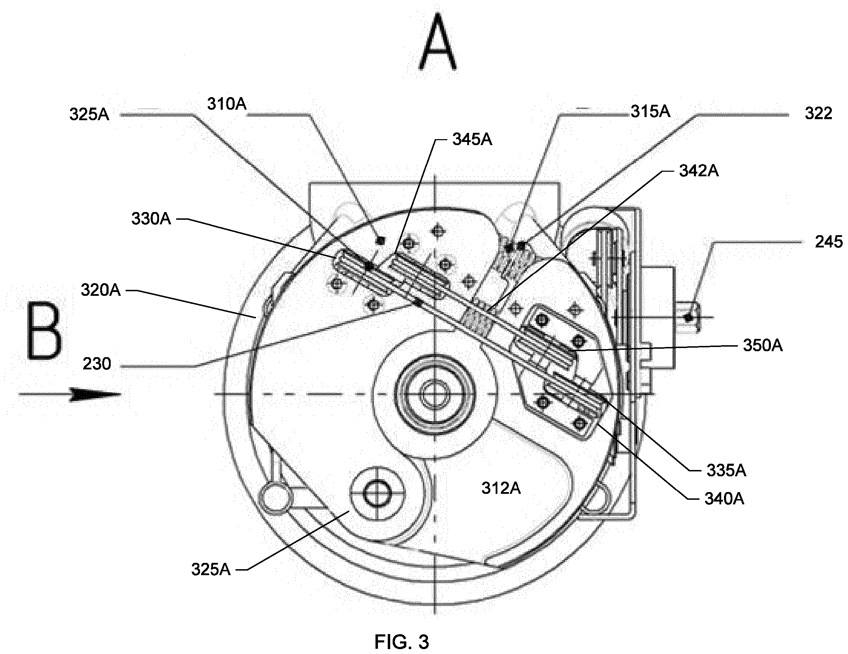

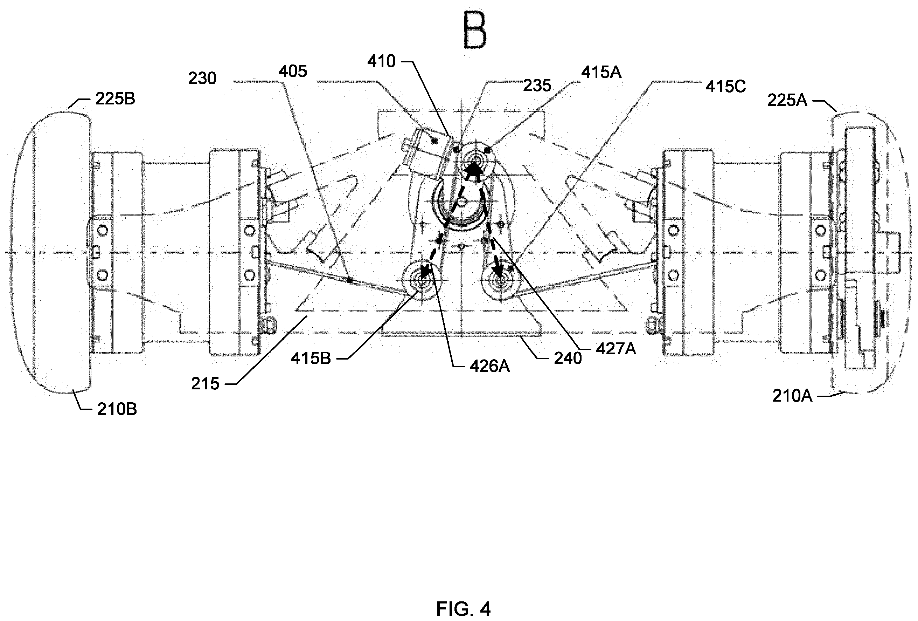

FIG. 2 shows a front view of a robot 205 in which an emergency braking system may be implemented according to one or more embodiments. In a specific embodiment, this brake system includes brake pads (e.g., 310A, 312A-FIG. 3), equipped with blocks (e.g., 330A, 340A-FIG. 3). A block may be referred to as a cable guide or pulley. The pads may be installed with the possibility of rotation on the motor (e.g., motor 220A-FIG. 2), which is mounted on a frame 215. Blocks 330A, 340A (FIG. 3) are covered by a cable 230. The cable may be referred to as a wire. Cable 230 connects the brake pads of both wheels, while bending around blocks or cable guides 415A-C (FIG. 4). Springs 315A, 342A (FIG. 3) are installed between the pads. Springs 315A, 342A tend to push the pads 310A, 312A apart and lock the wheel 210A (FIG. 2). For the synchronous extension of the pads 310A, 312A onto the motor 220A a synchronizing link 322 (FIG. 3) is mounted, against which the springs 315A, 342A abut. Blocks 415C and 415B (FIG. 4) are installed on a bracket 240, which is fixed on the frame 215. Block 415A is mounted on a link or trigger 235, which is fixed on the bracket 240 with the possibility of rotation. Also, in a specific embodiment, link (or trigger) 235 is equipped with a hexagonal end 245 (FIG. 2) for cocking and a platform of magnetic material. In the cocked state, the link or trigger 235 is held by an electromagnet 405 (FIG. 4) mounted on the link or trigger 235 (or more specifically mounted next to the link or trigger). The link or trigger 235 is attached with the possibility of adjustment to the bracket 240.

More particularly, in a specific embodiment, the robot shown in the example of FIG. 2 includes a first or left wheel 210A connected to a first end of a frame 215; a second or right wheel 210B, opposite the first wheel, and connected to a second end of the frame, opposite the first end of the frame; a first motor 220A at the first end of the frame that drives the first wheel; a second motor 220B at the second end of the frame that drives the second wheel; a first emergency braking unit 225A at the first wheel; a second emergency braking unit 225B at the second wheel; and a cable 230 connecting the first and second emergency braking units to a trigger 235.

The trigger may be referred to as a link. The trigger is positioned between the first and second braking units and pivotally connected to the bracket 240 which in turn is connected to the frame.

The cable may be referred to as a wire, line, or cord. Material of the cable may include steel (e.g., stainless steel), a polymer, carbon fiber, nylon, or any other suitable material. The cable may be a braided cable.

FIG. 3 shows a left side view A of FIG. 2. As shown in the example of FIG. 3, first emergency braking unit 225A for the first wheel includes a first brake pad 310A and a first spring 315A that urges the first brake pad towards a first braking surface 320A for the first wheel.

More specifically, the first brake pad is part of a pair of brake pads that includes a second brake pad 312A. First and second brake pads 310A, 312A are connected at a first joint 325A. The first joint may be a sliding type joint, a rotational type joint, or may allow both translation and rotational movement. There can be a second spring 342A next to first spring 315A. First spring 315A, along with second spring 342A, are opposite the first joint and between first and second brake pads 310A, 312A. First and second springs 315A, 342A are biased or configured to urge first and second brake pads 310A, 312A apart from each other and towards first braking surface 320A for the first wheel. There can be a first synchronizing link 322 between the first and second brake pads to synchronize the movement of the brake pads.

The first and second brake pads further include a set of blocks. A block may be referred to as a cable guide or pulley and can be used to change a direction of force of an attached cable. A block (e.g., cable guide or pulley) may include a groove in order to guide an attached cable. In particular, the first brake pad includes a first opening 325A in which a first cable guide 330A may be secured. The second brake pad includes a second opening 335A in which a second cable guide 340A may be secured. The cable is wrapped around the first and second cable guides.

The first opening in the first brake pad may further include a third cable guide 345A. The second opening in the second brake pad may further include a fourth cable guide 350A. Another portion of the cable may be wrapped around the third and fourth cable guides.

The cable can be pulled so as to pull the first and second brake pads together and away from the first braking surface. For example, in a specific embodiment, first and second springs 315A, 342A are coil springs (also referred to as helical springs) that urge first and second brake pads 310A, 312A away from each other and towards the first braking surface. Pulling the cable loads and compresses the springs as first and second brake pads 310A, 312A are pulled towards each other and away from the first braking surface.

In an embodiment, the second emergency braking unit for the second wheel is similar to the first emergency braking unit. For example, the second emergency braking unit 225A for the second wheel includes a third brake pad and a third spring that urges a fourth brake pad towards a second braking surface for the second wheel.

More specifically, the third brake pad is part of a second pair of brake pads that includes a fourth brake pad. Third and fourth brake pads are connected at a second joint. The second joint may be a sliding joint. There can be a fourth spring next to the third spring. The third spring, along with fourth spring, is opposite the second joint and between the third and fourth brake pads. The third and fourth springs are biased or configured to urge third and fourth brake pads apart from each other and towards the second braking surface for the second wheel. There can be a second synchronizing link between the third and fourth brake pads to synchronize the movement of the third and fourth brake pads.

The third and fourth brake pads further include a set of cable guides. In particular, the third brake pad includes a third opening in which a fifth cable guide may be secured. The fourth brake pad includes a fourth opening in which a sixth cable guide may be secured. Another portion of the cable may be wrapped around the fifth and sixth cable guides.

The third opening in the third brake pad may further include a seventh cable guide. The fourth opening in the fourth brake pad may further include an eighth cable guide. Another portion of the cable may be wrapped around the seventh and eighth cable guides. Pulling the cable pulls the first and second brake pads of the first emergency braking unit together and away from the first braking surface for the first wheel. Since the cable is also connected to the second braking the unit, pulling the cable also pulls the third and fourth brake pads of the second emergency braking unit together and away from the second braking surface for the second wheel.

FIG. 4 shows a rear view B from FIG. 3. As shown in the example of FIG. 4, bracket 240 includes trigger or link 235 pivotally connected to the bracket. The electromagnet 405 is fixedly connected to the bracket.

An electromagnet is a type of magnet in which the magnetic field is produced by an electric current. The magnetic field disappears when the current is turned off. An electromagnet may include wire wound into a coil. A current through the wire creates a magnetic field which is concentrated in a hole in the center of the coil. The wire turns are often wound around a magnetic core made from a ferromagnetic or ferrimagnetic material such as iron. The magnetic field can be changed by controlling the amount of electric current in the winding. An electromagnet, unlike a permanent magnet, requires a continuous supply of current to maintain the magnetic field.

The trigger includes a magnetic material 410. When the electromagnet is energized (e.g., supplied with power) a magnetic force is produced which causes the trigger to be retained against the electromagnet via the magnetic material.

The trigger includes a cable guide 415A. Cable guides 415B and 415C are connected to the bracket and below cable guide 415A. Cable guide 415B is positioned closer to second wheel 210B than first wheel 210A. Cable guide 415C is positioned closer to first wheel 210A than second wheel 210B. A routing path of the cable is from first braking unit 225A (where the cable is wrapped around the cable guides of the pair of brake pads in the first braking unit) to the link to second braking unit 225B (where the cable is wrapped around the cable guides of the pair of brake pads in the second braking unit). More particularly, the routing path of the cable is from first braking unit 225A, to and under cable guide 415C, to and over cable guide 415A, to and under cable guide 415B, and to second braking unit 225B.

FIG. 4 shows the trigger in a first position. The first position may be referred to as an "ON" position, cocked state, or a non-emergency braking position. In the first position, the electromagnet is energized and the trigger is retained or held against the electromagnet. The retaining of the trigger pulls the cable which, in turn, pulls the brake pads of the first and second braking units together and away from the respective braking surfaces of the first and second wheels.

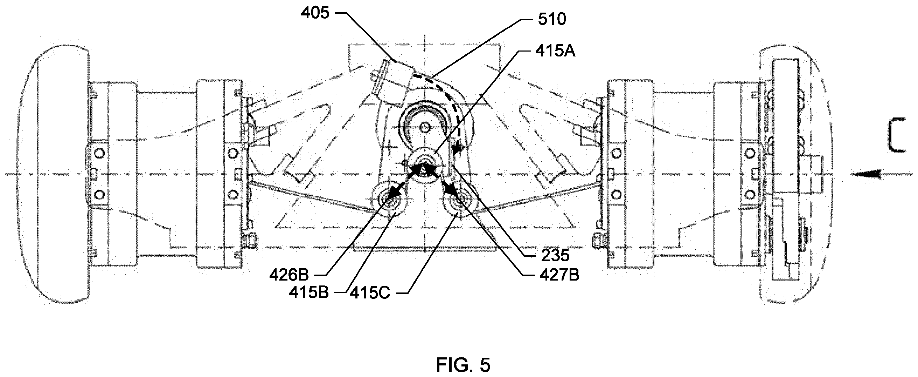

FIG. 5 shows trigger 235 in a second position. The second position may be referred to as an "OFF" position, un-cocked state, or an emergency braking position. In the second position, the electromagnet is de-energized. The loss of power to the electromagnet allows the link to be released from the electromagnet as the springs in the first and second braking units are allowed to extend thereby pushing the brake pads towards and against the respective first and second braking surfaces and pulling the cable which pulls the trigger pivotally away 510 from electromagnet 405.

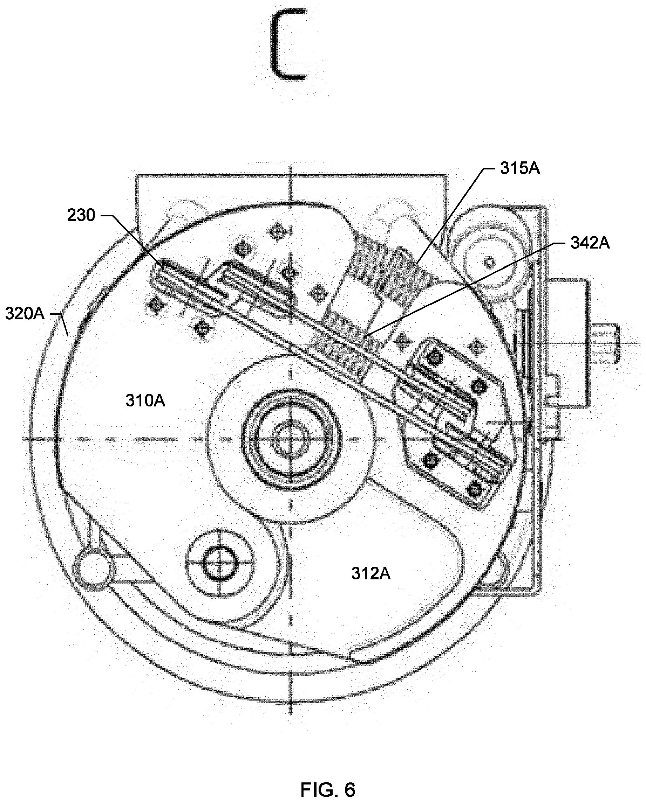

For example, FIG. 6 shows a side view C from FIG. 5. As shown in the example of FIG. 5, springs 315A, 342A have been allowed to extend. The extension of the springs pulls the trigger away from the de-energized electromagnet via cable 230 and pushes brake pads 310A, 312A away from each other and towards braking surface 320A of the wheel. In other words, as shown in FIG. 5, the trigger (and cable guide 415A connected to the trigger) is pulled down towards cable guides 415B and 415C via the cable routed to cable guide 415A.

More particularly, when the trigger is in the non-emergency braking position (FIG. 4), a first distance 426A is between cable guide 415A and cable guide 415B. A second distance 427A is between cable guide 415A and cable guide 415C.

When the trigger is in the emergency braking position (FIG. 5), a third distance 426B is between cable guide 415A and cable guide 415B. A fourth distance 427B is between cable guide 415A and cable guide 415C. The third distance is less than the first distance. That is, the first distance is greater than the third distance. The fourth distance is less than the second distance. That is, the second distance is greater than the fourth distance.

Referring back now to FIG. 2, in a specific embodiment, the trigger further includes a turning end 245. The turning end may be coaxial with an axis about which the trigger pivots relative to the electromagnet. In a specific embodiment, the turning end includes a shaft having a hexagonal cross-section. This allows, for example, the trigger to be reset such as by grasping the turning end with a wrench to rotate the trigger back towards the electromagnet. In another specific embodiment, the trigger may be reset by a motor connected to the turning end.

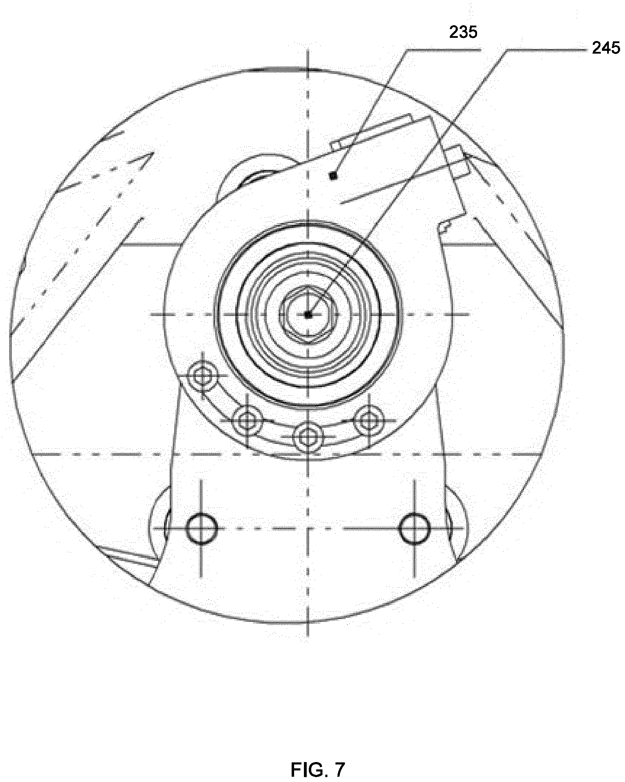

FIG. 7 shows an enlarged view D from FIG. 2 of trigger turning end 245 having a hexagonal end according to one or more embodiments.

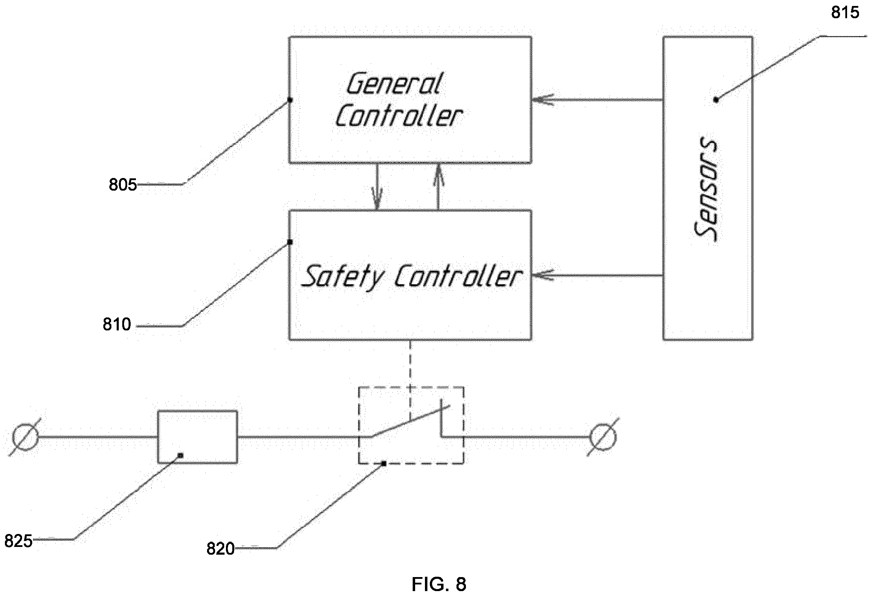

FIG. 8 shows a schematic diagram of an emergency brake control system according to one or more embodiments. As shown in the example of FIG. 8, there is a general controller 805, a safety controller 810, robot sensors 815, a switch 820, and an electromagnet 825. The general controller and safety controller communicate with each other and receive signals from the sensors. As discussed, these signals may include information about speed, velocity, acceleration, location, obstacles, distance, and so forth.

The switch is between the safety controller and the electromagnet and is controlled by the safety controller. For example, the safety controller may enable the switch so that power is permitted to be passed via the switch to the electromagnet. The current causes the electromagnet to be energized so that the trigger via the magnetic material is held in place against the electromagnet. When the safety controller determines that emergency braking is needed or the robot happens to lose power, the switch is disabled and thus power is blocked from flowing to the electromagnet. The electromagnet is de-energized (e.g., magnetic field is lost) and the trigger is thus released from the electromagnet as the springs in the braking units extend and push the brake pads toward their respective braking surfaces.

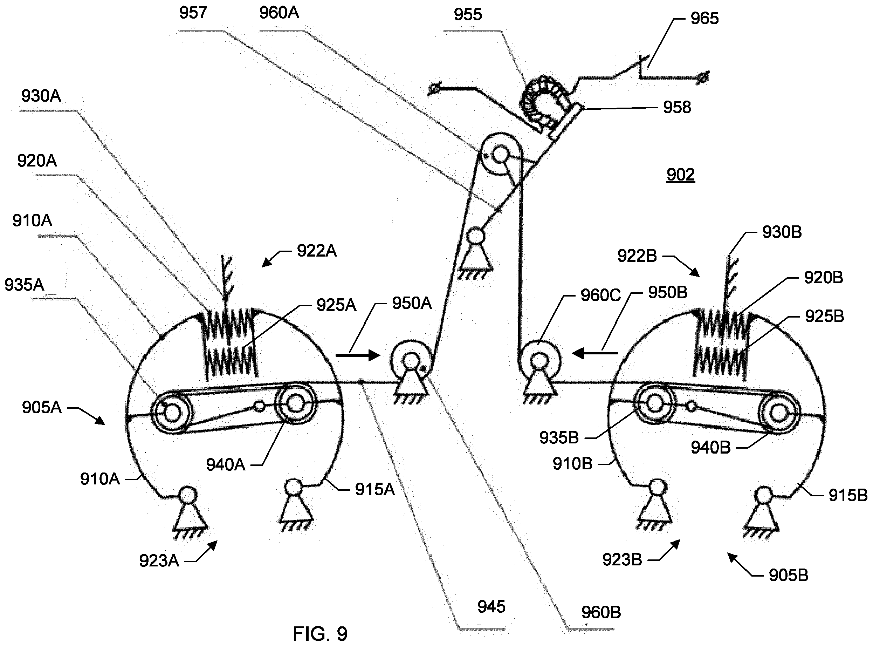

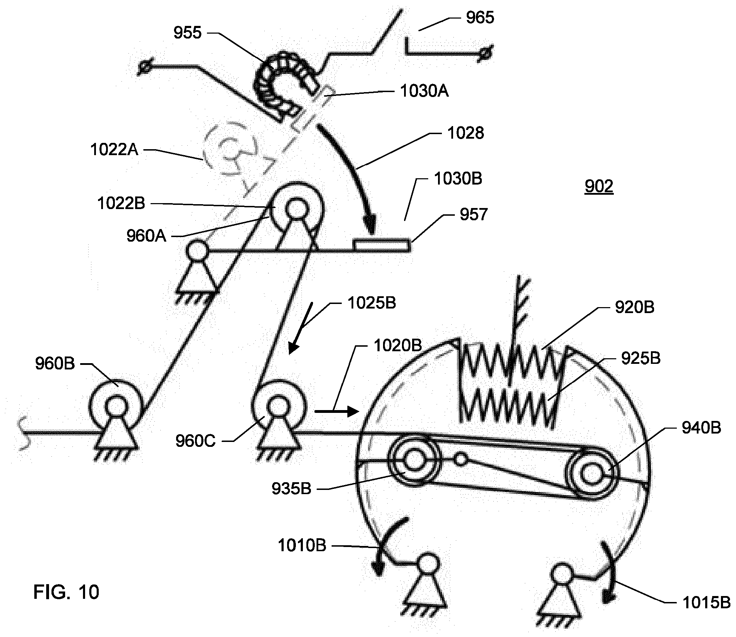

FIG. 9 shows another schematic diagram of an emergency braking system 902. FIG. 9 shows the emergency braking system in a first position (e.g., non-emergency braking position or set state-electrical power on magnet is ON) according to one or more embodiments. FIG. 10 shows a schematic diagram of the emergency braking system in a second position (e.g., emergency braking position or triggered position-electrical power is OFF) according to one or more embodiments.

In the power circuit of the electromagnet 825 (FIG. 8) installed switch 820 is managed by safety controller 810. The safety controller 810 receives information from the sensors of the robot 815 and analyzes it. In addition, the safety controller 810 communicates with the general controller 805 to monitor its operation. The safety controller 810 by the system owner includes criteria for determining the situation, which requires the use of emergency braking.

The force acting on brake pads 910A, 915A (FIG. 9) from the side of springs 920A, 925A is compensated by the force of the electromagnet acting on link 957. If necessary, the braking safety controller 810 (FIG. 8) turns off the power of electromagnet 955 (FIG. 9). As shown in the example of FIG. 10, the release of the link 957 allows the brake pads to open under the action of force from the spring 920A, 925A (and corresponding springs 920B, 925B) and come into contact with an inner cylindrical surface of the wheel. Along with this, link 957 begins rotation 1028, under the action of force from a side of the springs 920A, 925A (FIG. 9) (and corresponding springs 920B, 925B-FIG. 10).

In a specific embodiment, to bring the emergency braking system to the initial state, it is required to turn on the electromagnet 955 and turn the link 957 before contact with it. Rotation is carried out using hexagon tip 245 (FIG. 2). In some embodiments, this could be performed by a human operator, a robotized environment or by an additionally installed electrical motor, activated by robot controller in other embodiments.

More particularly, referring now to FIG. 9, in a specific embodiment, there is a first braking unit 905A and a second braking unit 905B. The first braking unit includes a first pair of brake pads including a first brake pad 910A and a second brake pad 915A, opposite the first brake pad, a first spring 920A and a second spring 925A, adjacent to or below the first spring. The first and second springs are positioned between ends 922A of the brake pads and opposite joints 923A about which the first and second brake pads may rotate, translate, or both. The first and second springs are biased to urge the first and second brake pads away from each other and towards a first braking surface of a first wheel. The first and second springs may be compression springs. A first synchronizing link 930A between the first and second brake pads and at the first spring helps to synchronize the movement of the brake pads so that each brake pad can move an equal (and opposite amount). In a specific embodiment, the first braking unit forms a first drum brake.

The first braking unit further includes a first cable guide 935A and a second cable guide 940A, opposite the first cable guide. The first and second cable guides are positioned between the first and second brake pads. The first cable guide may be connected to the first brake pad. The second cable guide may be connected to the second brake pad. A portion of a cable 945 is wrapped around the first and second cable guides. Thus, pulling the cable in a first direction 950A pulls the first and second brake pads together away from the first braking surface as the first and second springs are compressed.

The second braking unit may be a mirror image of the first braking unit. For example, the second braking unit includes a second pair of brake pads including a third brake pad 910B and a fourth brake pad 915B, opposite the third brake pad, a third spring 920B and a fourth spring 925B, adjacent to or below the third spring. The third and fourth springs are positioned between ends 922B of the brake pads and opposite joints 923B about which the third and fourth brake pads may rotate, translate, or both. The third and fourth springs are biased to urge the third and fourth brake pads away from each other and towards a second braking surface of a second wheel. The third and fourth springs may be compression springs. A second synchronizing link 930B between the third and fourth brake pads and at the third spring helps to synchronize the movement of the brake pads so that each brake pad can move an equal (and opposite) amount. In a specific embodiment, the second braking unit forms a second drum brake.

The second braking unit further includes a third cable guide 93 5B and a fourth cable guide 940B, opposite the third cable guide. The third and fourth cable guides are positioned between the third and fourth brake pads. The third cable guide may be connected to the third brake pad. The fourth cable guide may be connected to the fourth brake pad. Another portion of cable 945 is wrapped around the third and fourth cable guides. Thus, pulling the cable in a second direction 950B, opposite first direction 950A, pulls the third and fourth brake pads together away from the second braking surface as the third and fourth springs are compressed.

Between the first and second braking units is an electromagnet 955 and a pivotally connected link or trigger 957 having a plate or surface of magnetic material 958. In other words, the trigger can pivot with respect to or away from the electromagnet. The trigger includes a cable guide 960A. Cable guides 960B and 960C are below cable guide 960A, between the first and second braking units, and are fixed relative to cable guide 960A. The cable guides can help change a direction of a force applied to the cable and provide a smooth routing of the cable to the trigger. Although FIG. 9 shows three cable guides (960A-C) between the first and second braking units, it should be appreciated that a number of cable guides, a position of cable guides, or both can vary depending on factors such as the design of the first and second braking units, location of the trigger, and so forth. In a specific embodiment, the cable guides 960A-C lie in a first plane. Cable guides 935A and 940A of the first braking unit lie in a second plane, different from the first plane. Cable guides 93 5B and 940B of the second braking unit lie in a third plane, different from the first and second planes. The second and third planes are parallel to each other. The second and third planes are orthogonal to the first plane.

A routing path of the cable is from the first braking unit to cable guide 960B to cable guide 960A to cable guide 960C and to the second braking unit. In particular, the cable passes under cable guide 960B, over cable guide 960A, and under cable guide 960C.

A switch 965 passes power to the electromagnet which energizes the electromagnet. A magnetic field is created which attracts and holds the trigger against the electromagnet. A strength of the magnetic field is sufficient to overcome the energy stored in the first, second, third, and fourth springs so as to hold the trigger in the non-emergency braking position and thus the brake pads of the braking units away from their respective braking surfaces.

FIG. 10 shows the emergency braking system in the second position (e.g., emergency braking position). For purposes of clarity, the first braking unit has been omitted from the view in FIG. 10. As shown in the example of FIG. 10, switch 965 has been disabled or opened. Once power to electromagnet 955 is terminated, the electromagnet is de-energized and the magnetic field dissipates. The springs in the braking units (e.g., springs 920B and 925B) are permitted to extend and push 1010B, 1015B the respective brake pads against the respective braking surfaces of the wheels. The cable, being wrapped around the cable guides (e.g., cable guides 935B and 940B), is pulled in a third direction 1020B, opposite direction 950B (FIG. 9). A portion of the cable between cable guide 960A and 960C is pulled in a fourth direction 1025B towards cable guide 960C and is at an angle with respect to direction 1020B as the cable is wrapped about cable guide 960C. Cable guide 960A pivots from a position 1022A to a position 1022B as it is pulled down via the cable towards cable guide 960C. Since cable guide 960A is attached to trigger 957 (which is no longer held against the electromagnet because of the loss of the magnetic field), the trigger likewise pivots 1028 away from a position 1030A against the electromagnet to a position 1030B away from the electromagnet.

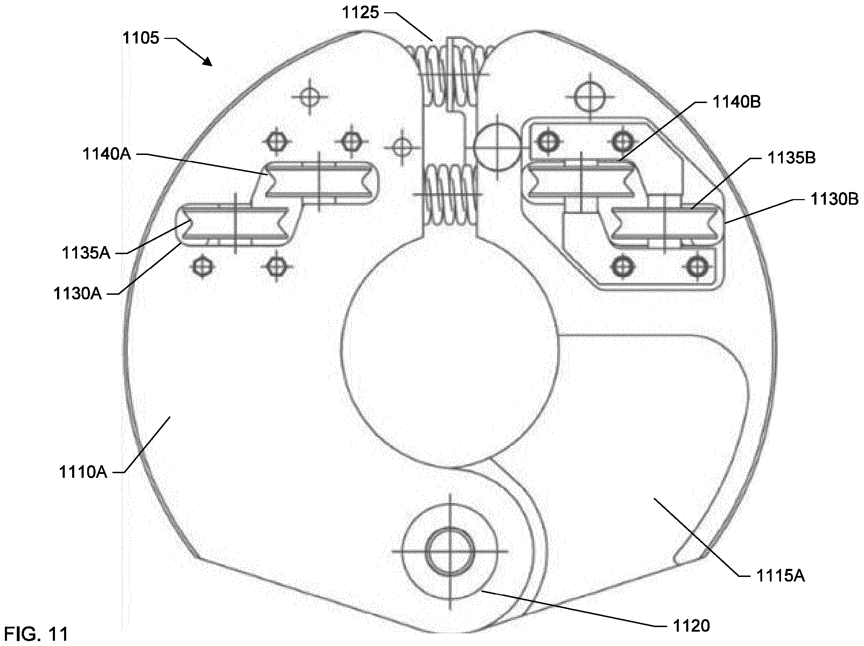

FIG. 11 shows a side view of a braking unit 1105 of an emergency brake system according to one or more embodiments. The braking unit may be referred to as an emergency braking unit. As shown in the example of FIG. 11, the braking unit includes first and second brake pads 1110A, 1115A. The pads are movably connected by a joint 1120 at their first ends. A pair of springs 1125 are positioned at second ends, opposite the first ends. Each pad may include braking material on outside edges of the pads. The springs are biased to urge the brake pads away from each other.

The first brake pad includes a first opening 1130A that includes a first cable guide 1135A, and a second cable guide 1140A. The second brake pad includes a second opening 1130B that includes a third cable guide 1135B, and a fourth cable guide 1140B. As discussed, a cable guide may be referred to as a block or pulley. A portion of a cable may be wrapped around cable guides 1135A and 1135B. Another portion of the cable may be wrapped around cable guides 1140A and 1140B. Pulling the cable pulls the brake pads together and away from a braking surface of a wheel as the springs compress.

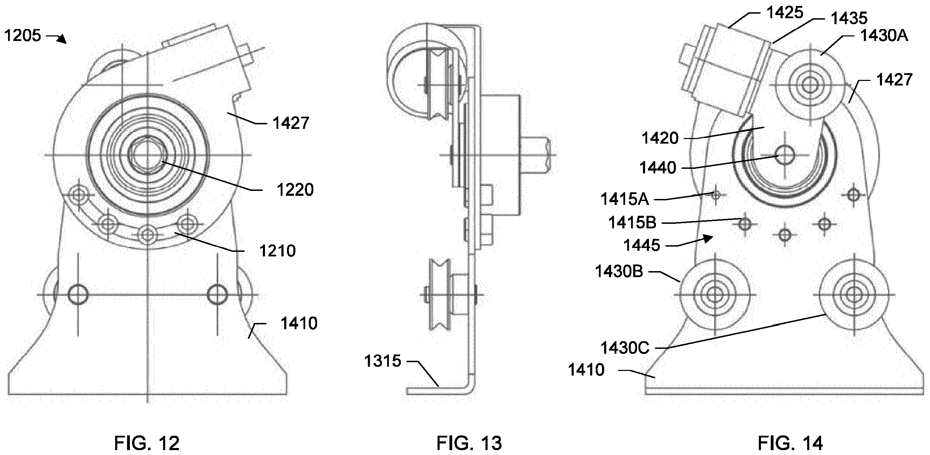

FIG. 12 shows a front view of a brake activator 1205 according to one or more embodiments. FIG. 13 shows a side view of the brake activator shown in FIG. 12. FIG. 14 shows a rear view of the brake activator shown in FIG. 12. FIGs. 12-14 show the brake activator in a non-emergency braking position.

Referring now to FIG. 14, the brake activator includes a bracket 1410 having a flange 1315 (FIG. 13) at a bottom end so that the bracket can be attached to a frame of a robot. A link or trigger 1420 is pivotally connected to a top end of the bracket, and an electromagnet 1425 is fixedly connected next to the trigger. More particularly, the electromagnet is fixed to another bracket 1427 which, in turn, is connected to bracket 1410 at the top end of bracket 1410. The trigger includes a cable guide 1430A and a plate 1435 having a magnetic material that extends out from the trigger to face the electromagnet. Cable guides 1430B and 1430C are connected to the bracket 1410 below cable guide 1430A. Cable guides 1430A-C form vertices of a triangle. The trigger pivots about a shaft 1440. The bracket further includes a set of holes 1445 arranged about the shaft in an arc. As discussed, a routing path of a cable may be from a first braking unit to cable guide 1430B to cable guide 1430A to cable guide 1430C to a second braking unit, opposite the first braking unit.

Referring now to FIG. 12, bracket 1427 upon which the electromagnet is mounted includes a curved slot 1210. The curved slot exposes holes 1445 (FIG. 14) in bracket 1410. The slot and corresponding holes allow the electromagnet to be repositioned relative to the trigger by repositioning bracket 1427 on bracket 1410. For example, the electromagnet may be positioned by holding the bracket 1427 in a first position, inserting a bolt through a first hole 1415A (FIG. 14) in bracket 1410 so that it extends into and out of curved slot 1210, and then fastening the bolt with a nut to secure the electromagnet in the first position. The electromagnet may be repositioned to a second position by, for example, removing the bolt and nut, holding bracket 1427 in a second position, different from the first position, inserting the bolt through a second hole 1415B (or optionally in first hole 1415A), and then retightening the nut to secure the electromagnet in the second position. The ability to reposition the electromagnet allows for adjustments to be made to obtain proper cable tension, accommodation of brake pads having varying thicknesses, accommodation for pad wear, and so forth.

Shaft 1440 (FIG. 14) about which the trigger pivots includes a turning interface 1220 (FIG. 12). In a specific embodiment, the turning interface includes an end having a hexagonal cross section. When an emergency is detected or the electromagnet otherwise loses power, the trigger falls down and pivots away from the electromagnet as the trigger is pulled away from the electromagnet by the cable (e.g., pivots in a clockwise direction according to the view shown in FIG. 14). The turning interface allows the trigger to be turned and reset from the emergency braking position to the non-emergency braking position (e.g., turned in a counterclockwise direction according to the view shown in FIG. 14). In a specific embodiment, resetting the trigger is a manual process. For example, a user, after re-energizing the electromagnet, may use a wrench to grasp the hexagonal end and rotate the trigger back towards the electromagnet. In another specific embodiment, a motor may be connected to the hexagonal end to rotate the trigger back towards the electromagnet.

Below are some benefits of the emergency braking system.
1) Embodiments help to ensure maximum response of mechanical parts of the brake system by using mechanical compression springs.
2) Embodiments improve the reliability of the emergency brake system by using steel cables and compression springs, instead of gases and hydraulic fluids.
3) Embodiments provide for operation of the system using only the electrical energy of the batteries and the mechanical energy stored in the springs.
4) Embodiments help to ensure uniform activation of the brake pads of both wheels since the brakes are initiated by one trigger mechanism and are controlled by one cable (e.g., steel or polymer cable).
5) Embodiments help to prevent the launching of the wheeled robot in the event that the power supply voltage of the robot has disappeared as a result of an abnormal situation.

Principles and aspects of an emergency braking system as described herein may be applied to any type of moving objects, equipped with wheels or other vehicle propulsion system (e.g., continuous track or tank treads).

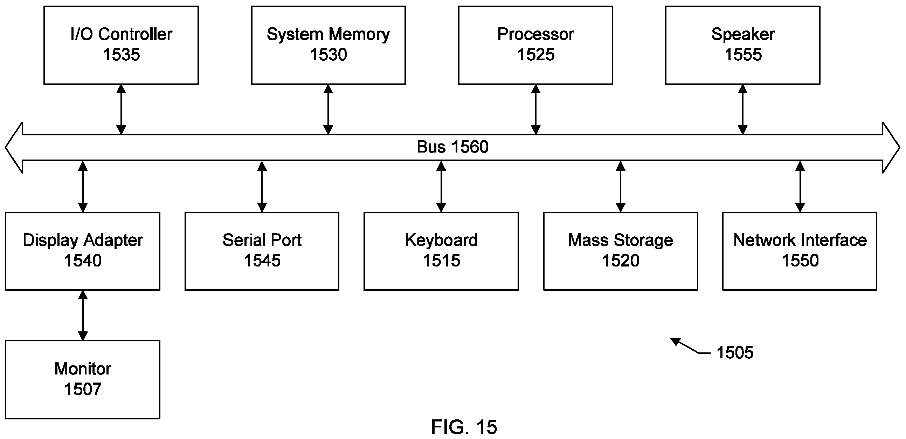

FIG. 15 shows a system block diagram of a computer system 1505 used to execute the software of the present system described herein. The computer system may include an output interface 1507 (e.g., monitor), input interface 1515 (e.g., keyboard), and mass storage devices 1520. Computer system 1505 may further include subsystems such as central processor 1525, system memory 1530, input/output (I/O) controller 1535, display adapter 1540, serial or universal serial bus (USB) port 1545, network interface 1550, and speaker 1555. The system may also be used with computer systems with additional or fewer subsystems. For example, a computer system could include more than one processor 1525 (i.e., a multiprocessor system) or a system may include a cache memory.

Arrows such as 1560 represent the system bus architecture of computer system 1505. However, these arrows are illustrative of any interconnection scheme serving to link the subsystems. For example, speaker 1555 could be connected to the other subsystems through a port or have an internal direct connection to central processor 1525. The processor may include multiple processors or a multicore processor, which may permit parallel processing of information. Computer system 1505 shown in FIG. 15 is but an example of a computer system suitable for use with the present system. Other configurations of subsystems suitable for use with embodiments of the present invention will be readily apparent to one of ordinary skill in the art.

Computer software products may be written in any of various suitable programming languages. The computer software product may be an independent application with data input and data display modules. Alternatively, the computer software products may be classes that may be instantiated as distributed objects. The computer software products may also be component software.

An operating system for the system may be one of the Microsoft Windows^{®}. family of systems (e.g., Windows Server), Linux, Mac OS X^{®}, IRIX32, or IRIX64. Other operating systems may be used. Microsoft Windows is a trademark of Microsoft Corporation.

Furthermore, the computer may be connected to a network and may interface to other computers using this network. The network may be an intranet, internet, or the Internet, among others. The network may be a wired network (e.g., using copper), telephone network, packet network, an optical network (e.g., using optical fiber), or a wireless network, or any combination of these. For example, data and other information may be passed between the computer and components (or steps) of a system of embodiments of the invention using a wireless network using a protocol such as Wi-Fi (IEEE standards 802.11, 802.11a, 802.11b, 802.11e, 802.11g, 802.11i, 802.11n, 802.11ac, and 802.11ad, just to name a few examples), near field communication (NFC), radio-frequency identification (RFID), mobile or cellular wireless. For example, signals from a computer may be transferred, at least in part, wirelessly to components or other computers.

It should be appreciated that the described embodiments can be implemented in numerous ways, including as a process, an apparatus, a system, a device, a method, or a computer-readable medium such as a computer-readable storage medium containing computer-readable instructions or computer program code, or as a computer program product, comprising a computer-usable medium having a computer-readable program code embodied therein. In the context of this invention, a computer-usable medium or computer-readable medium may be any physical medium that can contain or store the program for use by or in connection with the instruction execution system, apparatus or device. For example, the computer-readable storage medium or computer-usable medium may be, but is not limited to, a random access memory (RAM), read-only memory (ROM), or a persistent store, such as a mass storage device, hard drives, CDROM, DVDROM, tape, erasable programmable read-only memory (EPROM or flash memory), or any magnetic, electromagnetic, optical, or electrical means or system, apparatus or device for storing information. Alternatively or additionally, the computer-readable storage medium or computer-usable medium may be any combination of these devices or even paper or another suitable medium upon which the program code is printed, as the program code can be electronically captured, via, for instance, optical scanning of the paper or other medium, then compiled, interpreted, or otherwise processed in a suitable manner, if necessary, and then stored in a computer memory. Applications, software programs or computer-readable instructions may be referred to as components or modules. Applications may be hardwired or hard coded in hardware or take the form of software executing on a general purpose computer or be hardwired or hard coded in hardware such that when the software is loaded into and/or executed by the computer, the computer becomes an apparatus for practicing embodiments of the disclosure. Applications may also be downloaded, in whole or in part, through the use of a software development kit or toolkit that enables the creation and implementation of the described embodiments. In this specification, these implementations, or any other form that embodiments of the disclosure may take, may be referred to as techniques. In general, the order of the steps of disclosed processes may be altered within the scope of the invention. Aspects of the one or more embodiments described herein may be implemented on one or more computers executing software instructions, and the computers may be networked in a client-server arrangement or similar distributed computer network.

## Claims

1. A robot (205), comprising:
a frame (215);
a first wheel (210A) coupled to the frame;
a first braking unit (225A, 905A), coupled to the frame, and comprising a first brake pad (310A, 910A), and a first spring (315A, 920A) that urges the first brake pad towards a first braking surface (320A) for the first wheel;
**characterized in that** the robot further comprises:
an electromagnet (405, 825, 955);
a trigger (235, 957), pivotally coupled relative to the electromagnet, and comprising a magnetic surface (958); and
a cable (230), coupled to the first braking unit and routed to the trigger,
wherein when the electromagnet is energized, the trigger is retained against the electromagnet by the magnetic surface and pulls the cable which pulls the first brake pad away from the first braking surface, and
wherein when the electromagnet is de-energized, the trigger is released from the electromagnet as the first spring is allowed to extend which pushes the first brake pad against the first braking surface and pulls the cable which pulls the trigger pivotally away from the electromagnet.

2. The robot of claim 1, comprising:
a first cable guide (330A, 935A, 1135A) coupled to the trigger; and
a second cable guide (340A, 940A, 1140A), wherein a routing path of the cable is from the first braking unit to the second cable guide, and to the first cable guide, and
wherein when the electromagnet is de-energized, the first cable guide is pulled towards the second cable guide by the cable as the trigger is released and pivots away from the electromagnet.

3. The robot of claim 1, comprising:
a first cable guide (330A, 935A, 1135A) coupled to the trigger; and
a second cable guide (340A, 940A, 1140A), wherein a routing path of the cable is from the first braking unit to the second cable guide, and to the first cable guide, and
wherein when the electromagnet is energized, a first distance is between the first and second cable guides,
wherein when the electromagnet is de-energized, a second distance is between the first and second cable guides, and
wherein the second distance is less than the first distance.

4. The robot of claim 1, comprising a turning end (245) located at a pivot point of the trigger to allow the trigger to be rotated towards the electromagnet.

5. The robot of claim 1, comprising:
a switch (965), coupled between the electromagnet and a power supply,
wherein in a first mode, the switch passes power from the power supply to the electromagnet, thereby energizing the electromagnet to retain the trigger against the electromagnet, and
wherein in a second mode, the switch disconnects the power, thereby de-energizing the electromagnet and allowing the trigger to be released from the electromagnet.

6. The robot of claim 1, comprising:
a motor (220A), coupled to the frame, that provides braking to the first wheel during a non-emergency braking mode;
a safety controller (810) comprising logic to determine when the trigger should be released from the electromagnet; and
a switch (820), coupled between the electromagnet and the safety controller, wherein the safety controller controls the switch such that in the non-emergency braking mode, the switch passes power to the electromagnet, thereby energizing the electromagnet to retain the trigger against the electromagnet, and in an emergency braking mode, the switch is disabled thereby disconnecting power to the electromagnet and allowing the trigger to be released from the electromagnet.

7. The robot of claim 1, comprising:
a motor (220A), coupled to the frame, that provides braking to the first wheel during a non-emergency braking mode,
wherein when the motor is disabled during an emergency braking mode, the electromagnet is de-energized thereby allowing the trigger to be released and the first brake pad to push against the first braking surface.

8. The robot of claim 1, comprising:
a second wheel (210B), coupled to the frame, opposite the first wheel;
a second braking unit (225B, 905B), coupled to the frame, opposite the first braking unit, and comprising a second brake pad (312A, 915A), and a second spring (342A, 925A) that urges the second brake pad towards a second braking surface for the second wheel, the second braking unit being coupled to the cable, and the trigger being between the first and second braking units,
wherein when the electromagnet is energized, the trigger pulls the cable which pulls the second brake pad away from the second braking surface, along with pulling the first brake pad away from the first braking surface, and
wherein when the electromagnet is de-energized, the second spring is allowed to extend which pushes the second brake pad against the second braking surface for the second wheel, while the first spring also extends to push the first brake pad against the first braking surface for the first wheel.

9. The robot of claim 1, comprising:
a second wheel (210B), coupled to the frame, opposite the first wheel;
a second braking unit (225B, 905B), coupled to the frame, opposite the first braking unit, and comprising a second brake pad (312A, 915A), and a second spring (342A, 925A) that urges the second brake pad towards a second braking surface for the second wheel, the second braking unit being coupled to the cable, and the trigger being between the first and second braking units;
a first cable guide (330A, 935A, 1135A) coupled to the trigger;
a second cable guide (340A, 940A, 1140A), positioned between the first and second braking units;
a third cable guide (345A, 935B, 1135B), positioned between the first and second braking units, wherein a routing path of the cable is from the first braking unit to the second cable guide, to the first cable guide, to the third cable guide, and to the second braking unit,
wherein when the electromagnet is energized, a first distance is between the first and second cable guides, and a second distance is between the first and third cable guides,
wherein when the electromagnet is de-energized, a third distance is between the first and second cable guides, and a fourth distance is between the first and third cable guides, and
wherein the first distance is greater than the third distance, and the second distance is greater than the fourth distance.

10. The robot of claim 1, comprising:
a first motor (220A), coupled to the frame, that provides braking to the first wheel during a non-emergency braking mode;
a second wheel (210B), coupled to the frame, opposite the first wheel;
a second braking unit (225B, 905B), coupled to the frame, and comprising a second brake pad (312A, 915A), and a second spring (342A, 925A) that urges the second brake pad towards a second braking surface for the second wheel, the second braking unit being coupled to the cable; and
a second motor (220B), coupled to the frame, that provides braking to the second wheel during the non-emergency braking mode, wherein a routing path of the cable is from the first braking unit to the trigger to the second braking unit,
wherein during the non-emergency braking mode, the electromagnet is energized and the trigger pulls the cable which pulls the first brake pad away from the first braking surface, and the second brake pad away from the second braking surface, the braking to the first wheel thereby being provided by the first motor, and the braking to the second wheel thereby being provided by the second motor, and
wherein during an emergency braking mode, the electromagnet is de-energized and the trigger is released as the first spring urges the first brake pad towards the first braking surface, and the second spring urges the second brake pad towards the second braking surface.

11. The robot of claim 1, comprising:
a second wheel (210B) coupled to the frame;
a second braking unit (225B, 905B), coupled to the frame, and comprising a second brake pad (312A, 915A), and a second spring (342A, 925A) that urges the second brake pad towards a second braking surface for the second wheel, the second braking unit being coupled to the cable;
a bracket (1410), coupled to the frame, and to which the trigger is pivotally coupled, the bracket being between the first and second braking units;
a first cable guide (1430A) coupled to the trigger;
a second cable guide (1430B), coupled to the bracket; and
a third cable guide (1430C), coupled to the bracket, wherein a routing path of the cable is from the first braking unit, towards the second cable guide, to the first cable guide, towards the third cable guide, and to the second braking unit.

12. The robot of claim 1, comprising:
a first motor (220A), coupled to the frame, that provides braking to the first wheel during a non-emergency braking mode;
a second wheel (210B) coupled to the frame;
a second motor (220B), coupled to the frame, that provides braking to the second wheel during the non-emergency braking mode;
a second braking unit (225B, 905B), coupled to the frame, and comprising a second brake pad (312A, 915A), and a second spring (342A, 925A) that urges the second brake pad towards a second braking surface for the second wheel, the second braking unit being coupled to the cable, and a routing path of the cable being from the first braking unit, to the trigger, and to the second braking unit;
a safety controller (810) comprising logic to determine when the trigger should be released from the electromagnet; and
a switch (820), coupled between the electromagnet and the safety controller, wherein the safety controller controls the switch such that in the non-emergency braking mode, the switch passes power to the electromagnet, thereby energizing the electromagnet to retain the trigger against the electromagnet and pull, via the cable, the first brake pad away from the first braking surface, and the second brake pad away from the second braking surface, and in an emergency braking mode, the switch is disabled thereby disconnecting power to the electromagnet and allowing the trigger to be pulled away from the electromagnet, via the cable, as the first spring extends to urge the first brake pad towards the first braking surface for the first wheel, and as the second spring extends to urge the second brake pad towards the second braking surface for the second wheel.

13. The robot of claim 1, comprising:
a first motor (220A), coupled to the frame, that provides braking to the first wheel during a non-emergency braking mode;
a second wheel (210B) coupled to the frame;
a second motor (220B), coupled to the frame, that provides braking to the second wheel during the non-emergency braking mode;
a second braking unit (225B, 905B), coupled to the frame, and comprising a second brake pad (312A, 915A), and a second spring (342A, 925A) that urges the second brake pad towards a second braking surface for the second wheel;
a bracket (1410), coupled to the frame, and to which the trigger is pivotally coupled, and the electromagnet fixedly coupled, the bracket being between the first and second braking units;
a first cable guide (1430A) coupled to the trigger;
a second cable guide (1430B), coupled to the bracket;
a third cable guide (1430C), coupled to the bracket, the second cable guide being closer to one of the first or second braking units, and the third cable guide being closer to another of the first or second braking units, a path of the cable being from the first braking unit to the second cable guide, towards the first cable guide, towards the third cable guide, and to the second braking unit;
a safety controller (810) comprising logic to determine when an emergency braking mode should be entered;
a switch (820), coupled between the electromagnet and the safety controller, wherein the safety controller controls the switch such that in the non-emergency braking mode, the switch passes power to the electromagnet to energize the electromagnet and retain the trigger against the electromagnet, thereby pulling the cable which pulls the first brake pad away from the first braking surface, and the second brake pad away from the second braking surface, and in the emergency braking mode, the switch disconnects power to the electromagnet to de-energize the electromagnet and allow the trigger to be pivoted away from the electromagnet by the cable as the first spring extends to urge the first brake pad against the first braking surface, and as the second spring extends to urge the second brake pad against the second braking surface; and
a turning interface (1220) on the trigger to allow the magnetic surface of the trigger to be rotated towards the electromagnet, which pulls the cable and thereby the first brake pad away from the first braking surface, and the second brake pad away from the second braking surface.

14. The robot of claim 13,
comprising a third motor, coupled to the turning interface, to rotate the trigger towards the electromagnet; or
comprising a battery to supply the power.

15. The robot of claim 2, wherein the first and second cable guides comprise a groove to guide the cable.

## Patentansprüche

1. Roboter (205), Folgendes umfassend:
ein Gestell (215),
ein erstes Rad (210A), das an das Gestell gekoppelt ist,
eine erste Bremseinheit (225A, 905A), die an das Gestell gekoppelt ist und einen ersten Bremsklotz (310A, 910A) und eine erste Feder (315A, 920A) umfasst, welche den ersten Bremsklotz hin zu einer ersten Bremsfläche (320A) für das erste Rad drängt,
**dadurch gekennzeichnet, dass** der Roboter ferner Folgendes umfasst:
einen Elektromagneten (405, 825, 955),
einen Auslöser (235, 957), der schwenkbar relativ zu dem Elektromagneten gekoppelt ist und eine Magnetfläche (958) umfasst, und
ein Kabel (230), das an die erste Bremseinheit gekoppelt und zu dem Auslöser geführt ist,
wobei der Auslöser bei eingeschaltetem Elektromagneten durch die Magnetfläche an dem Elektromagneten gehalten wird und das Kabel zieht, das den ersten Bremsklotz weg von der ersten Bremsfläche zieht, und
wobei der Auslöser bei ausgeschaltetem Elektromagneten von dem Elektromagneten gelöst ist, da sich die erste Feder ausdehnen kann, was den ersten Bremsklotz an die erste Bremsfläche drückt und das Kabel zieht, das den Auslöser schwenkend weg von dem Elektromagneten zieht.

2. Roboter nach Anspruch 1, Folgendes umfassend:
eine erste Kabelführung (330A, 935A, 1135A), die an den Auslöser gekoppelt ist, und
eine zweite Kabelführung (340A, 940A, 1140A), wobei ein Führungsweg des Kabels von der ersten Bremseinheit zu der zweiten Kabelführung und zu der ersten Kabelführung verläuft und
wobei die erste Kabelführung bei ausgeschaltetem Elektromagneten durch das Kabel hin zu der zweiten Kabelführung gezogen wird, da der Auslöser gelöst wird und weg von dem Elektromagneten schwenkt.

3. Roboter nach Anspruch 1, Folgendes umfassend:
eine erste Kabelführung (330A, 935A, 1135A), die an den Auslöser gekoppelt ist, und
eine zweite Kabelführung (340A, 940A, 1140A), wobei ein Führungsweg des Kabels von der ersten Bremseinheit zu der zweiten Kabelführung und zu der ersten Kabelführung verläuft und
wobei bei eingeschaltetem Elektromagneten ein erster Abstand zwischen der ersten und der zweiten Kabelführung besteht,
wobei bei ausgeschaltetem Elektromagneten ein zweiter Abstand zwischen der ersten und der zweiten Kabelführung besteht und
wobei der zweite Abstand kleiner als der erste Abstand ist.

4. Roboter nach Anspruch 1, ein drehendes Ende (245) umfassend, das sich an einem Schwenkpunkt des Auslösers befindet, um das Drehen des Auslösers hin zu dem Elektromagneten zu ermöglichen.

5. Roboter nach Anspruch 1, Folgendes umfassend:
einen Schalter (965), der zwischen den Elektromagneten und eine Energieversorgung gekoppelt ist,
wobei der Schalter in einem ersten Modus Energie von der Energieversorgung zu dem Elektromagneten leitet, wodurch der Elektromagnet eingeschaltet wird, um den Auslöser an dem Elektromagneten zu halten, und
wobei der Schalter in einem zweiten Modus die Energieversorgung unterbricht, wodurch der Elektromagnet ausgeschaltet wird und das Lösen des Auslösers von dem Elektromagneten ermöglicht wird.

6. Roboter nach Anspruch 1, Folgendes umfassend:
einen Motor (220A), der an das Gestell gekoppelt ist und während eines Nicht-Notbremsmodus ein Bremsen des ersten Rades bereitstellt,
eine Sicherheitssteuerung (810), die Logik umfasst, um zu bestimmen, wenn der Auslöser von dem Elektromagneten gelöst werden soll, und
einen Schalter (820), der zwischen den Elektromagneten und die Sicherheitssteuerung gekoppelt ist, wobei die Sicherheitssteuerung den Schalter derart steuert, dass der Schalter in dem Nicht-Notbremsmodus Energie zu dem Elektromagneten leitet, wodurch der Elektromagnet eingeschaltet wird, um den Auslöser an dem Elektromagneten zu halten, und dass der Schaltet in einem Notbremsmodus deaktiviert wird, wodurch die Energieversorgung des Elektromagneten unterbrochen wird und das Lösen des Auslösers von dem Elektromagneten ermöglicht wird.

7. Roboter nach Anspruch 1, Folgendes umfassend:
einen Motor (220A), der an das Gestell gekoppelt ist und während eines Nicht-Notbremsmodus ein Bremsen des ersten Rades bereitstellt,
wobei der Elektromagnet bei deaktiviertem Motor während eines Notbremsmodus ausgeschaltet ist, was das Lösen des Auslösers und das Drücken des ersten Bremsklotzes an die erste Bremsfläche ermöglicht.

8. Roboter nach Anspruch 1, Folgendes umfassend:
ein zweites Rad (210B), das gegenüber dem ersten Rad an das Gestell gekoppelt ist,
eine zweite Bremseinheit (225B, 905B), die gegenüber der ersten Bremseinheit an das Gestell gekoppelt ist und einen zweiten Bremsklotz (312A, 915A) und eine zweite Feder (342A, 925A) umfasst, welche den zweiten Bremsklotz hin zu einer zweiten Bremsfläche für das zweite Rad drängt, wobei die zweite Bremseinheit an das Kabel gekoppelt ist und sich der Auslöser zwischen der ersten und der zweiten Bremseinheit befindet,
wobei der Auslöser bei eingeschaltetem Elektromagneten das Kabel zieht, das den zweiten Bremsklotz weg von der zweiten Bremsfläche zieht, zusammen mit dem Wegziehen des ersten Bremsklotzes von der ersten Bremsfläche, und
wobei es der Feder bei ausgeschaltetem Elektromagneten ermöglicht ist, sich auszudehnen, was den zweiten Bremsklotz an die zweite Bremsfläche für das zweite Rad drückt, während sich die erste Feder ebenfalls ausdehnt, um den ersten Bremsklotz gegen die erste Bremsfläche für das erste Rad zu drücken.

9. Roboter nach Anspruch 1, Folgendes umfassend:
ein zweites Rad (210B), das gegenüber dem ersten Rad an das Gestell gekoppelt ist,
eine zweite Bremseinheit (225B, 905B), die gegenüber der ersten Bremseinheit an das Gestell gekoppelt ist und einen zweiten Bremsklotz (312A, 915A) und eine zweite Feder (342A, 925A) umfasst, welche den zweiten Bremsklotz hin zu einer zweiten Bremsfläche für das zweite Rad drängt, wobei die zweite Bremseinheit an das Kabel gekoppelt ist und sich der Auslöser zwischen der ersten und der zweiten Bremseinheit befindet,
eine erste Kabelführung (330A, 935A, 1135A), die an den Auslöser gekoppelt ist,
eine zweite Kabelführung (340A, 940A, 1140A), die zwischen der ersten und der zweiten Bremseinheit positioniert ist,
eine dritte Kabelführung (345A, 935B, 1135B), die zwischen der ersten und der zweiten Bremseinheit positioniert ist, wobei ein Führungsweg des Kabels von der ersten Bremseinheit zu der zweiten Kabelführung, zu der ersten Kabelführung, zu der dritten Kabelführung und zu der zweiten Bremseinheit führt,
wobei bei eingeschaltetem Elektromagneten ein erster Abstand zwischen der ersten und der zweiten Kabelführung besteht, und ein zweiter Abstand zwischen der ersten und der dritten Kabelführung besteht,
wobei bei ausgeschaltetem Elektromagneten ein dritter Abstand zwischen der ersten und der zweiten Kabelführung besteht und ein vierter Abstand zwischen der ersten und der dritten Kabelführung besteht und
wobei der erste Abstand größer als der dritte Abstand ist und der zweite Abstand größer als der vierte Abstand ist.

10. Roboter nach Anspruch 1, Folgendes umfassend:
einen ersten Motor (220A), der an das Gestell gekoppelt ist und während eines Nicht-Notbremsmodus ein Bremsen des ersten Rades bereitstellt,
ein zweites Rad (210B), das gegenüber dem ersten Rad an das Gestell gekoppelt ist,
eine zweite Bremseinheit (225B, 905B), die an das Gestell gekoppelt ist und einen zweiten Bremsklotz (312A, 915A) und eine zweite Feder (342A, 925A) umfasst, welche den zweiten Bremsklotz hin zu einer zweiten Bremsfläche für das zweite Rad drängt, wobei die zweite Bremseinheit an das Kabel gekoppelt ist und
einen zweiten Motor (220B), der an das Gestell gekoppelt ist und während des Nicht-Notbremsmodus ein Bremsen des zweiten Rades bereitstellt, wobei ein Führungsweg des Kabels von der ersten Bremseinheit zu dem Auslöser zu der zweiten Bremseinheit führt,
wobei der Elektromagnet während des Nicht-Notbremsmodus eingeschaltet ist und der Auslöser das Kabel zieht, das den ersten Bremsklotz weg von der ersten Bremsfläche und den zweiten Bremsklotz weg von der zweiten Bremsfläche zieht, wobei dadurch das Bremsen des ersten Rades durch den ersten Motor bereitgestellt wird und dadurch das Bremsen des zweiten Rades durch den zweiten Motor bereitgestellt wird, und
wobei der Elektromagnet während eines Notbremsmodus ausgeschaltet ist und der Auslöser gelöst ist, da die erste Feder den ersten Bremsklotz hin zu der ersten Bremsfläche drängt und die zweite Feder die zweite Bremse hin zu der zweiten Bremsfläche drängt.

11. Roboter nach Anspruch 1, Folgendes umfassend:
ein zweites Rad (210B), das an das Gestell gekoppelt ist,
eine zweite Bremseinheit (225B, 905B), die an das Gestell gekoppelt ist und einen zweiten Bremsklotz (312A, 915A) und eine zweite Feder (342A, 925A) umfasst, welche den zweiten Bremsklotz hin zu einer zweiten Bremsfläche für das zweite Rad drängt, wobei die zweite Bremseinheit an das Kabel gekoppelt ist,
eine Halterung (1410), die an das Gestell gekoppelt ist und an die der Auslöser schwenkbar gekoppelt ist, wobei sich die Halterung zwischen der ersten und der zweiten Bremseinheit befindet,
eine erste Kabelführung (1430A), die an den Auslöser gekoppelt ist,
eine zweite Kabelführung (1430B), die an die Halterung gekoppelt ist, und
eine dritte Kabelführung (1430C), die an die Halterung gekoppelt ist, wobei ein Führungsweg des Kabels von der ersten Bremseinheit hin zu der zweiten Kabelführung, zu der ersten Kabelführung, hin zu der dritten Kabelführung und zu der zweiten Bremseinheit verläuft.

12. Roboter nach Anspruch 1, Folgendes umfassend:
einen ersten Motor (220A), der an das Gestell gekoppelt ist und während eines Nicht-Notbremsmodus ein Bremsen des ersten Rades bereitstellt,
ein zweites Rad (210B), das an das Gestell gekoppelt ist,
einen zweiten Motor (220B), der an das Gestell gekoppelt ist und während des Nicht-Notbremsmodus ein Bremsen des zweiten Rades bereitstellt,
eine zweite Bremseinheit (225B, 905B), die an das Gestell gekoppelt ist und einen zweiten Bremsklotz (312A, 915A) und eine zweite Feder (342A, 925A) umfasst, welche den zweiten Bremsklotz hin zu einer zweiten Bremsfläche für das zweite Rad drängt, wobei die zweite Bremseinheit an das Kabel gekoppelt ist und ein Führungsweg des Kabels von der ersten Bremseinheit zu dem Auslöser und zu der zweiten Bremseinheit verläuft,
eine Sicherheitssteuerung (810), die Logik umfasst, um zu bestimmen, wann der Auslöser von dem Elektromagneten gelöst werden soll, und
einen Schalter (820), der zwischen den Elektromagneten und die Sicherheitssteuerung gekoppelt ist, wobei die Sicherheitssteuerung den Schalter derart steuert, dass der Schalter in dem Nicht-Notbremsmodus Energie zu dem Elektromagneten leitet, wodurch der Elektromagnet eingeschaltet wird, um den Auslöser an dem Elektromagneten zu halten und mittels des Kabels den ersten Bremsklotz weg von der ersten Bremsfläche und den zweiten Bremsklotz weg von der zweiten Bremsfläche zu ziehen, und der Schalter in einem Notbremsmodus deaktiviert wird, wodurch die Energieversorgung zu dem Elektromagneten unterbrochen wird und das Wegziehen des Auslösers von dem Elektromagneten mittels des Kabels ermöglicht wird, da sich die erste Feder ausdehnt, um den ersten Bremsklotz hin zu der ersten Bremsfläche für das erste Rad zu drängen, und da sich die zweite Feder ausdehnt, um den zweiten Bremsklotz hin zu der zweiten Bremsfläche für das zweite Rad zu drängen.

13. Roboter nach Anspruch 1, Folgendes umfassend:
einen ersten Motor (220A), der an das Gestell gekoppelt ist und während eines Nicht-Notbremsmodus ein Bremsen des ersten Rades bereitstellt,
ein zweites Rad (210B), das an das Gestell gekoppelt ist,
einen zweiten Motor (220B), der an das Gestell gekoppelt ist und während des Nicht-Notbremsmodus ein Bremsen des zweiten Rades bereitstellt,
eine zweite Bremseinheit (225B, 905B), die an das Gestell gekoppelt ist und einen zweiten Bremsklotz (312A, 915A) und eine zweite Feder (342A, 925A) umfasst, welche den zweiten Bremsklotz hin zu einer zweiten Bremsfläche für das zweite Rad drängt,
eine Halterung (1410), die an das Gestell gekoppelt ist und an die der Auslöser schwenkbar gekoppelt ist und der Elektromagnet fest gekoppelt ist, wobei sich die Halterung zwischen der ersten und der zweiten Bremseinheit befindet,
eine erste Kabelführung (1430A), die an den Auslöser gekoppelt ist,
eine zweite Kabelführung (1430B), die an die Halterung gekoppelt ist, und
eine dritte Kabelführung (1430C), die an die Halterung gekoppelt ist, wobei die zweite Kabelführung näher zu einer von der ersten und der zweiten Bremseinheit liegt und die dritte Kabelführung näher zu der anderen von der ersten und der zweiten Bremseinheit liegt, wobei ein Weg des Kabels von der ersten Bremseinheit zu der zweiten Kabelführung, hin zu der ersten Kabelführung, hin zu der dritten Kabelführung und zu der zweiten Bremseinheit führt,
eine Sicherheitssteuerung (810), die Logik umfasst, um zu bestimmen, wann in einen Notbremsmodus einzutreten ist,
einen Schalter (820), der zwischen den Elektromagneten und die Sicherheitssteuerung gekoppelt ist, wobei die Sicherheitssteuerung den Schalter derart steuert, dass der Schalter in dem Nicht-Notbremsmodus Energie zu dem Elektromagneten leitet, um den Elektromagneten einzuschalten und den Auslöser an dem Elektromagneten zu halten und den Auslöser an dem Elektromagneten zu halten, wodurch das Kabel gezogen wird, das den ersten Bremsklotz weg von der ersten Bremsfläche und den zweiten Bremsklotz weg von der zweiten Bremsfläche zieht, und dass der Schalter in dem Notbremsmodus die Energieversorgung des Elektromagneten unterbricht, um den Elektromagneten auszuschalten und das Schwenken des Auslösers weg von dem Elektromagneten durch das Kabel zu ermöglichen, da sich die erste Feder ausdehnt, um den ersten Bremsklotz hin zu der ersten Bremsfläche zu drängen, und da sich die zweite Feder ausdehnt, um den zweiten Bremsklotz hin zu der zweiten Bremsfläche zu drängen, und
eine drehende Grenzfläche (1220) an dem Auslöser, um das Drehen der Magnetfläche des Auslösers hin zu dem Elektromagneten zu ermöglichen, was das Kabel zieht und dadurch den ersten Bremsklotz weg von der ersten Bremsfläche und den zweiten Bremsklotz weg von der zweiten Bremsfläche.

14. Roboter nach Anspruch 13,
einen dritten Motor umfassend, der an die drehende Grenzfläche gekoppelt ist, um den Auslöser hin zu dem Elektromagneten zu drehen oder
eine Batterie zur Energieversorgung umfassend.

15. Roboter nach Anspruch 2, wobei die erste und die zweite Kabelführung eine Rille zum Führen des Kabels umfassen.

## Revendications

1. Robot (205), comprenant :
une ossature (215) ;
une première roue (210A) couplée à l'ossature ;
une première unité (225A, 905A) de freinage, couplée à l'ossature, et comprenant un premier patin (310A, 910A) de frein, et un premier ressort (315A, 920A) qui sollicite le premier patin de frein vers une première surface (320A) de freinage pour la première roue ;
**caractérisé en ce que** le robot comprend en outre :
un électroaimant (405, 825, 955) ;
un déclencheur (235, 957), en liaison pivot avec l'électroaimant, et comprenant une surface magnétique (958) ; et
un câble (230), couplé à la première unité de freinage et acheminé jusqu'au déclencheur,
le déclencheur, lorsque l'électroaimant est alimenté,
étant maintenu contre l'électroaimant par la surface magnétique et tirant le câble qui écarte le premier patin de frein de la première surface de freinage, et
le déclencheur, lorsque l'alimentation de l'électroaimant est coupée, étant libéré de l'électroaimant tandis qu'il est permis au premier ressort de s'allonger, ce qui pousse le premier patin de frein contre la première surface de freinage et tire le câble qui écarte, par pivotement, le déclencheur de l'électroaimant.

2. Robot selon la revendication 1, comprenant :
un premier guide (330A, 935A, 1135A) de câble couplé au déclencheur ; et
un deuxième guide (340A, 940A, 1140A) de câble, un trajet d'acheminement du câble allant de la première unité de freinage au deuxième guide de câble, et
jusqu'au premier guide de câble, et
lorsque l'alimentation de l'électroaimant est coupée,
le premier guide de câble étant tiré vers le deuxième guide de câble par le câble tandis que le déclencheur est libéré et pivote pour s'écarter de l'électroaimant.

3. Robot selon la revendication 1, comprenant :
un premier guide (330A, 935A, 1135A) de câble couplé au déclencheur ; et
un deuxième guide (340A, 940A, 1140A) de câble, un trajet d'acheminement du câble allant de la première unité de freinage au deuxième guide de câble, et
jusqu'au premier guide de câble, et
une première distance existant entre les premier et
deuxième guides de câble lorsque l'électroaimant est alimenté,
une deuxième distance existant entre les premier et
deuxième guides de câble lorsque l'alimentation de l'électroaimant est coupée, et
la deuxième distance étant inférieure à la première distance.

4. Robot selon la revendication 1, comprenant une extrémité rotatoire (245) située à un point de pivot du déclencheur pour permettre au déclencheur d'être tourné vers l'électroaimant.

5. Robot selon la revendication 1, comprenant :
un commutateur (965), couplé entre l'électroaimant et
une alimentation électrique,
le commutateur, dans un premier mode, transmettant une puissance de l'alimentation électrique à l'électroaimant, alimentant ainsi l'électroaimant pour maintenir le déclencheur contre l'électroaimant, et
le commutateur, dans un deuxième mode, déconnectant la puissance, coupant ainsi l'alimentation de l'électroaimant et permettant au déclencheur d'être libéré de l'électroaimant.

6. Robot selon la revendication 1, comprenant :
un moteur (220A), couplé à l'ossature, qui assure un freinage de la première roue pendant un mode de freinage hors urgence ;
une commande (810) de sécurité comprenant une logique servant à déterminer le moment où le déclencheur doit être libéré de l'électroaimant ; et
un commutateur (820), couplé entre l'électroaimant et
la commande de sécurité, la commande de sécurité commandant le commutateur de telle façon que, dans le mode de freinage hors urgence, le commutateur transmette une puissance à l'électroaimant, alimentant ainsi l'électroaimant pour maintenir le déclencheur contre l'électroaimant, et que, dans un mode de freinage d'urgence, le commutateur soit désactivé,
coupant ainsi l'alimentation de l'électroaimant et
permettant au déclencheur d'être libéré de l'électroaimant.

7. Robot selon la revendication 1, comprenant :
un moteur (220A), couplé à l'ossature, qui assure un freinage de la première roue pendant un mode de freinage hors urgence,
l'alimentation de l'électroaimant étant coupée lorsque le moteur est désactivé pendant un mode de freinage d'urgence, permettant ainsi au déclencheur d'être libéré et au premier patin de frein d'appuyer contre la première surface de freinage.

8. Robot selon la revendication 1, comprenant :
une deuxième roue (210B), couplée à l'ossature, en face de la première roue ;
une deuxième unité (225B, 905B) de freinage, couplée à l'ossature en face de la première unité de freinage, et
comprenant un deuxième patin (312A, 915A) de frein, et
un deuxième ressort (342A, 925A) qui sollicite le deuxième patin de frein vers une deuxième surface de freinage pour la deuxième roue, la deuxième unité de freinage étant couplée au câble, et le déclencheur se trouvant entre les première et deuxième unités de freinage,
le déclencheur, lorsque l'électroaimant est alimenté,
tirant le câble qui écarte le deuxième patin de frein de la deuxième surface de freinage, tout en écartant le premier patin de frein de la première surface de freinage, et
le deuxième ressort étant autorisé à s'allonger lorsque l'alimentation de l'électroaimant est coupée, ce qui pousse le deuxième patin de frein contre la deuxième surface de freinage pour la deuxième roue, pendant que le premier ressort s'allonge également pour pousser le premier patin de frein contre la première surface de freinage pour la première roue.

9. Robot selon la revendication 1, comprenant :
une deuxième roue (210B), couplée à l'ossature, en face de la première roue ;
une deuxième unité (225B, 905B) de freinage, couplée à l'ossature en face de la première unité de freinage, et
comprenant un deuxième patin (312A, 915A) de frein, et
un deuxième ressort (342A, 925A) qui sollicite le deuxième patin de frein vers une deuxième surface de freinage pour la deuxième roue, la deuxième unité de freinage étant couplé au câble, et le déclencheur se trouvant entre les première et deuxième unités de freinage ;
un premier guide (330A, 935A, 1135A) de câble couplé au déclencheur ;
un deuxième guide (340A, 940A, 1140A) de câble,
positionné entre les première et deuxième unités de freinage ;
un troisième guide (345A, 935B, 1135B) de câble,
positionné entre les première et deuxième unités de freinage, un trajet d'acheminement du câble allant de la première unité de freinage au deuxième guide de câble, au premier guide de câble, au troisième guide de câble, et jusqu'à la deuxième unité de freinage,
une première distance existant entre les premier et
deuxième guides de câble et une deuxième distance existant entre les premier et troisième guides de câble lorsque l'électroaimant est alimenté,
une troisième distance existant entre les premier et
deuxième guides de câble et une quatrième distance existant entre les premier et troisième guides de câble lorsque l'alimentation de l'électroaimant est coupée,
et
la première distance étant supérieure à la troisième distance, et la deuxième distance étant supérieure à la quatrième distance.

10. Robot selon la revendication 1, comprenant :
un premier moteur (220A), couplé à l'ossature, qui assure un freinage de la première roue pendant un mode de freinage hors urgence ;
une deuxième roue (210B), couplée à l'ossature, en face de la première roue ;
une deuxième unité (225B, 905B) de freinage, couplée à l'ossature, et comprenant un deuxième patin (312A, 915A) de frein, et un deuxième ressort (342A, 925A) qui sollicite le deuxième patin de frein vers une deuxième surface de freinage pour la deuxième roue, la deuxième unité de freinage étant couplée au câble ; et
un deuxième moteur (220B), couplé à l'ossature, qui assure un freinage de la deuxième roue pendant le mode de freinage hors urgence, un trajet d'acheminement du câble allant de la première unité de freinage au déclencheur, jusqu'à la deuxième unité de freinage,
pendant le mode de freinage hors urgence,
l'électroaimant étant alimenté et le déclencheur tirant le câble qui écarte le premier patin de frein de la première surface de freinage, et écarte le deuxième patin de frein de la deuxième surface de freinage, le freinage de la première roue étant ainsi assuré par le premier moteur, et le freinage de la deuxième roue étant ainsi assuré par le deuxième moteur, et
pendant un mode de freinage d'urgence, l'alimentation de l'électroaimant étant coupée et le déclencheur étant libéré tandis que le premier ressort sollicite le premier patin de frein vers la première surface de freinage, et que le deuxième ressort sollicite le deuxième patin de frein vers la deuxième surface de freinage.

11. Robot selon la revendication 1, comprenant :
une deuxième roue (210B) couplée à l'ossature ;
une deuxième unité (225B, 905B) de freinage, couplée à l'ossature, et comprenant un deuxième patin (312A, 915A) de frein, et un deuxième ressort (342A, 925A) qui sollicite le deuxième patin de frein vers une deuxième surface de freinage pour la deuxième roue, la deuxième unité de freinage étant couplée au câble ;
un support (1410), couplé à l'ossature, et avec lequel le déclencheur est en liaison pivot, le support se trouvant entre les première et deuxième unités de freinage ;
un premier guide (1430A) de câble couplé au déclencheur ;
un deuxième guide (1430B) de câble, couplé au support ;
et
un troisième guide (1430C) de câble, couplé au support,
un trajet d'acheminement du câble allant de la première unité de freinage, vers le deuxième guide de câble,
jusqu'au premier guide de câble, vers le troisième guide de câble, et jusqu'à la deuxième unité de freinage.

12. Robot selon la revendication 1, comprenant :
un premier moteur (220A), couplé à l'ossature, qui assure un freinage de la première roue pendant un mode de freinage hors urgence ;
une deuxième roue (210B) couplée à l'ossature ;
un deuxième moteur (220B), couplé à l'ossature, qui assure un freinage de la deuxième roue pendant le mode de freinage hors urgence ;
une deuxième unité (225B, 905B) de freinage, couplée à l'ossature, et comprenant un deuxième patin (312A, 915A) de frein, et un deuxième ressort (342A, 925A) qui sollicite le deuxième patin de frein vers une deuxième surface de freinage pour la deuxième roue, la deuxième unité de freinage étant couplée au câble, et un trajet d'acheminement du câble allant de la première unité de freinage, au déclencheur, et jusqu'à la deuxième unité de freinage ;
une commande (810) de sécurité comprenant une logique servant à déterminer le moment où le déclencheur doit être libéré de l'électroaimant ; et
un commutateur (820), couplé entre l'électroaimant et
la commande de sécurité, la commande de sécurité commandant le commutateur de telle façon que dans le mode de freinage hors urgence, le commutateur transmette une puissance à l'électroaimant, alimentant ainsi l'électroaimant pour maintenir le déclencheur contre l'électroaimant et écarter, par l'intermédiaire du câble, le premier patin de frein de la première surface de freinage, et écarter le deuxième patin de frein de la deuxième surface de freinage, et le commutateur étant désactivé dans un mode de freinage d'urgence, coupant ainsi l'alimentation de l'électroaimant et permettant au déclencheur d'être écarté de l'électroaimant, par l'intermédiaire du câble,
tandis que le premier ressort s'allonge pour solliciter le premier patin de frein vers la première surface de freinage pour la première roue, et tandis que le deuxième ressort s'allonge pour solliciter le deuxième patin de frein vers la deuxième surface de freinage pour la deuxième roue.

13. Robot selon la revendication 1, comprenant :
un premier moteur (220A), couplé à l'ossature, qui assure un freinage de la première roue pendant un mode de freinage hors urgence ;
une deuxième roue (210B) couplée à l'ossature ;
un deuxième moteur (220B), couplé à l'ossature, qui assure un freinage de la deuxième roue pendant le mode de freinage hors urgence ;
une deuxième unité (225B, 905B) de freinage, couplée à l'ossature, et comprenant un deuxième patin (312A, 915A) de frein, et un deuxième ressort (342A, 925A) qui sollicite le deuxième patin de frein vers une deuxième surface de freinage pour la deuxième roue ;
un support (1410), couplé à l'ossature, et avec lequel le déclencheur est en liaison pivot, et l'électroaimant en liaison complète, le support se trouvant entre les première et deuxième unités de freinage ;
un premier guide (1430A) de câble couplé au déclencheur ;
un deuxième guide (1430B) de câble, couplé au support ;
un troisième guide (1430C) de câble, couplé au support,
le deuxième guide de câble étant plus proche d'une des première et deuxième unités de freinage, et le troisième guide de câble étant plus proche d'une autre des première et deuxième unités de freinage, un trajet du câble allant de la première unité de freinage au deuxième guide de câble, vers le premier guide de câble,
vers le troisième guide de câble, et jusqu'à la deuxième unité de freinage ;
une commande (810) de sécurité comprenant une logique servant à déterminer le moment où il faut entrer dans un mode de freinage d'urgence ;
un commutateur (820), couplé entre l'électroaimant et
la commande de sécurité, la commande de sécurité commandant le commutateur de telle façon que dans le mode de freinage hors urgence, le commutateur transmette une puissance à l'électroaimant pour alimenter l'électroaimant et maintenir le déclencheur contre l'électroaimant, tirant ainsi le câble qui écarte le premier patin de frein de la première surface de freinage, et écarte le deuxième patin de frein de la deuxième surface de freinage, et que dans le mode de freinage d'urgence, le commutateur déconnecte la puissance de l'électroaimant pour couper l'alimentation de l'électroaimant et permettre au déclencheur d'être écarté, par pivotement, de l'électroaimant par le câble tandis que le premier ressort s'allonge pour solliciter le premier patin de frein contre la première surface de freinage, et tandis que le deuxième ressort s'allonge pour solliciter le deuxième patin de frein contre la deuxième surface de freinage ; et
une interface rotatoire (1220) sur le déclencheur pour permettre à la surface magnétique du déclencheur d'être tournée vers l'électroaimant, qui tire le câble et
écarte ainsi le premier patin de frein de la première surface de freinage, et écarte le deuxième patin de frein de la deuxième surface de freinage.

14. Robot selon la revendication 13,
comprenant un troisième moteur, couplé à l'interface rotatoire, pour faire tourner le déclencheur vers l'électroaimant ; ou
comprenant une batterie servant à fournir l'alimentation.

15. Robot selon la revendication 2, les premier et deuxième guides de câble comprenant une rainure servant à guider le câble.
